# EUROPEAN PATENT APPLICATION

(11) **EP 4 357 868 A1**
(43) Date of publication of application: **24.04.2024**
(21) Application number: 23826780.1
(22) Date of filing: 14.04.2023
(51) Int. Cl.: G05D 1/00, B64C 13/20, B64C 39/02, B64F 1/36, G05D 1/10

(54) **MULTIPLE AIRCRAFT FLIGHT MANAGEMENT SYSTEM, METHOD, AND PROGRAM**

(30) Priority: 20.06.2022 JP 2022098571
(71) Applicant: KAWASAKI JUKOGYO KABUSHIKI KAISHA, Kobe-shi, Hyogo 650-8670 (JP)
(72) Inventor: MATSUMURA, Shigeru, (JP); KUBO, Yoshiharu, (JP); DESSEN, Yuki, (JP); UMEDA, Takuya, (JP); MORI, Shumpei, (JP)
(74) Representative: Bals & Vogel Patentanwälte PartGmbB
(86) International application number: PCT/JP2023/015178
(87) International publication number: WO 2023/248591

(57) **Abstract**

A flight management system for a plurality of aerial vehicles includes a management apparatus and an operation terminal. The management apparatus includes a processing circuit configured to manage operation authorizations to operate the plurality of aerial vehicles. The operation terminal includes an operation interface and a processing circuit. The operation interface is operable by an operator. The processing circuit is connected to the operation interface. Based on an authorization grant request signal obtained based on a flight state of each aerial vehicle of the plurality of aerial vehicles, the processing circuit of the management apparatus is configured to transmit an authorization grant command to grant the operation terminal an operation authorization, among the operation authorizations, that is to operate a particular aerial vehicle among the plurality of aerial vehicles. The processing circuit of the operation terminal is configured to remotely control the particular aerial vehicle while being granted the operation authorization to operate the particular aerial vehicle.

## Description

### Technical Field

The present disclosure relates to a flight management system, a flight management method, and a flight management program for a plurality of aerial vehicles.

### Background Art

Patent Literature 1 discloses a flight system for a drone. In this system, an operator operates an operation terminal to wirelessly transmit a control signal to the drone. The control signal is a command to the drone as to how to behave. In this manner, the drone controlled remotely based on the control signal.

### Citation List

### Patent Literature

PTL1: JP 2021-146848 A

### Summary of Invention

### Technical Problem

In this system, one operator is necessary per drone. That is, as the number of drones increases, the number of operators increases. As a result, there is a risk of increasing personnel costs in a case where a plurality of drones are used.

In view of the above-described circumstances, one embodiment of the present disclosure has an object to realize personnel saving in using a plurality of remotely controllable aerial vehicles.

### Solution to Problem

According to one aspect of the present disclosure, a flight management system for a plurality of aerial vehicles includes a management apparatus and an operation terminal. The management apparatus includes a processing circuit configured to manage operation authorizations to operate the plurality of aerial vehicles. The operation terminal includes an operation interface and a processing circuit. The operation interface is operable by an operator. The processing circuit is connected to the operation interface. Based on an authorization grant request signal obtained based on a flight state of each aerial vehicle of the plurality of aerial vehicles, the processing circuit of the management apparatus is configured to generate an authorization grant command to grant the operation terminal an operation authorization, among the operation authorizations, that is to operate a particular aerial vehicle among the plurality of aerial vehicles. The processing circuit of the operation terminal is configured to remotely control the particular aerial vehicle while obtaining the operation authorization to operate the particular aerial vehicle.

According to another aspect of the present disclosure, a flight management method for a plurality of aerial vehicles includes determining whether an authorization grant request signal has been received while a management apparatus is holding an operation authorization. The authorization grant request signal is obtained based on a flight state of each aerial vehicle of the plurality of aerial vehicles. Upon receipt of the authorization grant signal, an operation terminal is granted the operation authorization to operate a particular aerial vehicle. The particular aerial vehicle is remotely controlled while the operation terminal is being granted the operation authorization to operate the particular aerial vehicle.

According to the other aspect of the present disclosure, a flight management program causes at least one processor to execute the flight management method. The program is storable in a computer readable storage medium. The storage medium is a non-transitory and tangible medium. The storage medium may be internal or external to a computer. Examples of the storage medium include a RAM, a ROM, an EEPROM, and a storage. The storage medium may be formed in a hard disk, a flash memory, an optical disc, and the like. The program stored in the storage medium may be executed in a computer to which the storage medium is directly connected, or may be executed in a computer to which the storage medium is connected via a network. An example of the network is the Internet.

### Effects of Invention

In the above-described aspects of the present disclosure, on the one hand, the management apparatus manages flight of a plurality of aerial vehicles. On the other hand, upon generation of an authorization grant request signal for a particular aerial vehicle, the particular aerial vehicle is controlled by an operator using the operation terminal. This configuration ensures that while a plurality of aerial vehicles are remotely operable, the number of operators is smaller than the number of aerial vehicles.

### Brief Description of Drawings

[FIG. 1] FIG. 1 is a schematic representation of a flight management system for a plurality of aerial vehicles.
[FIG. 2] FIG. 2 is a block diagram of an aerial vehicle illustrated in FIG. 1.
[FIG. 3] FIG. 3 is a block diagram of an operation terminal illustrated in FIG. 1.
[FIG. 4] FIG. 4 is a block diagram of a management apparatus illustrated in FIG. 1.
[FIG. 5] FIG. 5 is a sequence chart of processing performed by the flight management system illustrated in FIG. 1.
[FIG. 6] FIG. 6 is a schematic representation of a monitor screen of an output interface of the management apparatus illustrated in FIG. 2.

### Description of Embodiments

Embodiments will be described below by referring to the drawings.

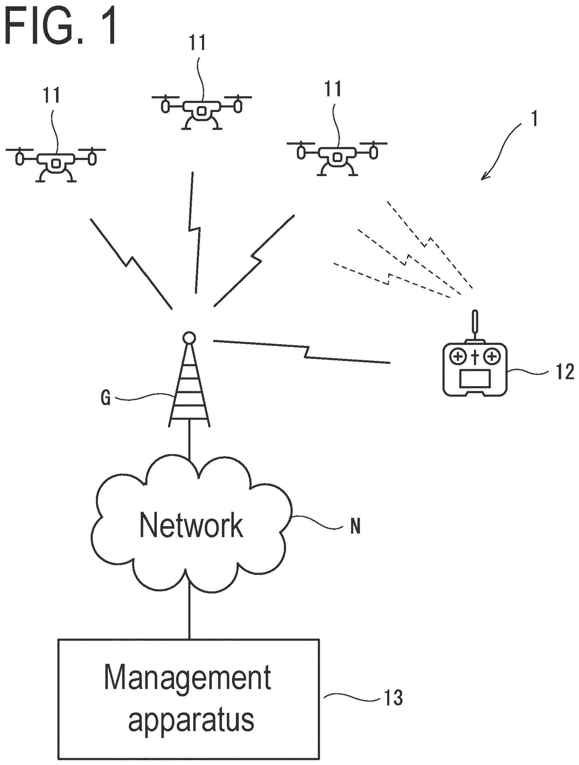

FIG. 1 is a schematic representation of a flight management system 1 for a plurality of aerial vehicles. As illustrated in FIG. 1, the flight management system 1 includes a plurality of aerial vehicles 11, at least one operation terminal 12, and a management apparatus 13. An example of each aerial vehicle 11 is an unmanned aerial vehicle. The aerial vehicle 11 flies in a mode that is either a plural-management mode or an individual operation mode. The operation terminal 12 remotely controls the aerial vehicle 11 in the individual operation mode by being individually operated an operator. The operation terminal 12 is wirelessly communicable with the aerial vehicle 11. An example of the wireless communication between the operation terminal 12 and the aerial vehicle 11 is direct wireless communication using a bandwidth of 2.4 GHz or 920 MHz. The number of operation terminals 12 is smaller than the number of aerial vehicles 11.

The aerial vehicle 11 and the operation terminal 12 are communicable with a base station G via a public data communication network. An example of the public data communication network is a mobile phone network. The base station G is connected to a network N. An example of the network N is the Internet. It is to be noted that the aerial vehicle 11 and the operation terminal 12 may be connected to the network N via a public data communication network such as a satellite communication network. In a case where the Internet is available at the place where the operation terminal 12 exists, the operation terminal 12 may be connected to the network N by, for example, a wireless LAN or a wired LAN. The management apparatus 13 provides the aerial vehicle 11 with information for the aerial vehicle 11 to fly in the plural-management mode. The management apparatus 13 manages operation authorizations of the plurality of aerial vehicles 11.

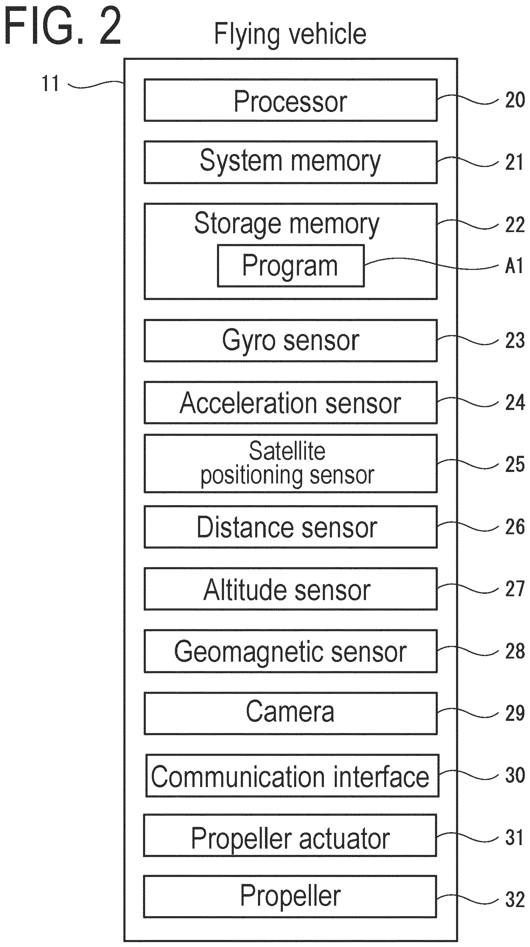

FIG. 2 is a block diagram of the aerial vehicle 11 illustrated in FIG. 1. As illustrated in FIG. 2, the aerial vehicle 11 includes a processor 20, a system memory 21, a storage memory 22, gyro sensors 23, acceleration sensors 24, a satellite positioning sensor 25, a distance sensor 26, an altitude sensor 27, a geomagnetic sensor 28, a camera 29, a communication interface 30, propeller actuators 31, and propellers 32.

The storage memory 22 stores a flight program A1. The flight program A1 is read into the system memory 21 and executed by the processor 20. This configuration is a processing circuit example. The flight program A1 may be partially or entirely executed by a processor external to the aerial vehicle 11, and a result of the execution may be received by the aerial vehicle 11.

The gyro sensors 23 each detect an angular velocity about a corresponding one of three attitude axes of the aerial vehicle 11. The attitude axes are orthogonal to each other. One orientation axis is set to correspond to a front-rear direction of the aerial vehicle 11, another orientation axis is set to correspond to a right-left direction of the aerial vehicle 11, and the other orientation axis is set to correspond to a vertical direction of the aerial vehicle 11. One acceleration sensor 24 detects an acceleration in the front-rear direction of the aerial vehicle 11, another acceleration sensor 24 detects an acceleration in the right-left direction of the aerial vehicle 11, and the other acceleration sensor 24 detects an acceleration in the vertical direction of the aerial vehicle 11. The processor 20 integrates the accelerations detected by the acceleration sensors 24 to calculate a speed. The satellite positioning sensor 25 detects a position of the aerial vehicle 11 using a satellite positioning system. An example of the satellite positioning system is a GPS (Global Positioning System). The distance sensor 26 detects a distance between the aerial vehicle 11 and an object. An example of the distance sensor 26 is an ultrasonic sensor or an optical sensor. The altitude sensor 27 detects an altitude of the aerial vehicle 11. An example of the altitude sensor 27 is a pneumatic sensor or an electric wave sensor. A pneumatic sensor may also serve as a speed sensor. The geomagnetic sensor 28 detects a magnetic force of the Earth to obtain directions based on the aerial vehicle 11.

The camera 29 takes an image of a surrounding of the aerial vehicle 11. The communication interface 30 includes a communicator that wirelessly communicates with the base station G; and a communicator that wirelessly communicates with the operation terminal 12. The aerial vehicle 11 includes, for example, four propellers 32. By adjusting rotation speeds of the four propellers 32, a behavior of the aerial vehicle 11 is determined. The propeller actuators 31 are each provided at a corresponding one of the four propellers 32 to drive the corresponding one propeller 32. The sensors 23 to 28, the camera 29, the communication interface 30, and the propeller actuators 31 are connected to the processor 20.

The processor 20, which executes the flight program A1, selectively executes the plural-management mode and the individual operation mode. In the plural-management mode, the aerial vehicle 11 makes an automatic flight. The term automatic flight refers to a flight that the aerial vehicle 11 makes in the plural-management mode based on flight plan information received at the communication interface 30. The communication interface 30 receives flight plan information from the management apparatus 13 via the network N and the base station G. The flight plan information includes information concerning a planned flight route, a planned flight speed, and a landing/take-off point. The processor 20 causes the aerial vehicle 11 to make an automatic flight by controlling the propeller actuators 31 based on the detection signals from the sensors 23 to 28 and in accordance with the flight plan information.

In the individual operation mode, the aerial vehicle 11 flies based on a command transmitted from the operation terminal 12 and received at the communication interface 30. The communication interface 30 receives the command directly by wireless communication from the operation terminal 12 that has been operated by the operator. Manual operations of the operator are input to the operation terminal 12. The manual operations indicate an upward or downward movement command, a rightward or leftward movement command, a forward or rearward movement command, and a rightward or leftward turning command. The flight plan information may be input to the operation terminal 12 as a flight command. These commands are received at the communication interface 30 of the aerial vehicle 11 in the individual operation mode. The processor 20 controls the propeller actuators 31 in accordance with these commands.

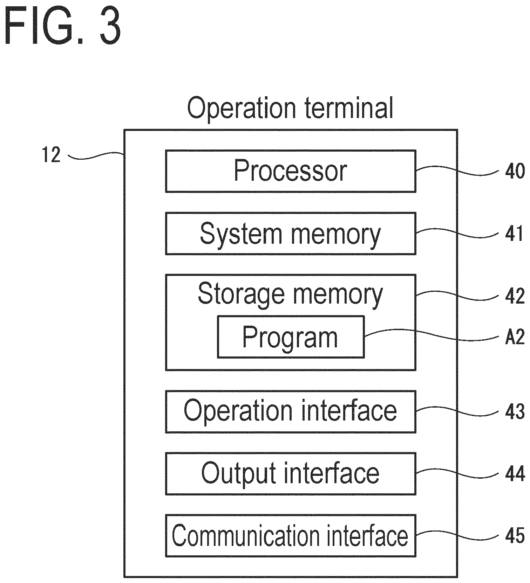

FIG. 3 is a block diagram of the operation terminal 12 illustrated in FIG. 1. As illustrated in FIG. 3, the operation terminal 12 includes a processor 40, a system memory 41, a storage memory 42, an operation interface 43, an output interface 44, and a communication interface 45.

The storage memory 42 stores an operation program A2. The operation program A2 is read into the system memory 41 and executed by the processor 40. This configuration is a processing circuit example. The operation program A2 may be partially or entirely executed by a processor external to the operation terminal 12, and an execution result may be received at the operation terminal 12.

The operation interface 43 is a user interface operated by the operator. The operation interface 43 is capable of receiving commands associated with flight plan information, a flight speed, a flight altitude, and a flight direction. For example, the operation interface 43 is capable of receiving operations based on the flight plan information, an upward or downward movement command, a rightward or leftward movement command, a forward or rearward movement command, and a rightward or leftward turning command. Examples of the operation interface 43 include a lever, a handle, and a touch panel.

The output interface 44 is a user interface that outputs information to the operator. An example of the output interface 44 is a display. The output interface 44 may include a speaker. The output interface 44 is capable of displaying position information indicating the position of the aerial vehicle 11. In a case where it is difficult for the operator to visually recognize the aerial vehicle 11 directly, the operator may operate the operation interface 43 while visually checking the position of the aerial vehicle 11 on the output interface 44. The communication interface 45 includes a communicator that wirelessly communicates with the base station G; and a communicator that wirelessly communicates with the aerial vehicle 11. The operation interface 43, the output interface 44, and the communication interface 45 are connected to the processor 40.

In a case where the operation terminal 12 is granted an operation authorization to operate one aerial vehicle 11 selected from the plurality of aerial vehicles 11, the operator may individually operate the operation terminal 12 to remotely control the selected aerial vehicle 11. That is, upon operation of the operation interface 43, the processor 20 of the operation terminal 12 remotely controls the selected aerial vehicle 11 in the individual operation mode while being granted the operation authorization.

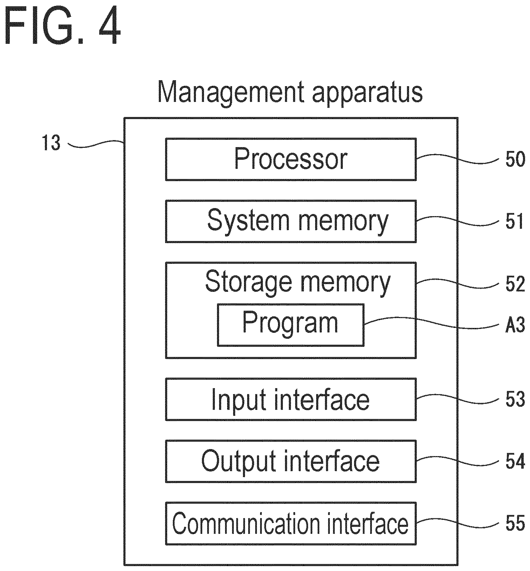

FIG. 4 is a block diagram of the management apparatus 13 illustrated in FIG. 1. As illustrated in FIG. 4, the management apparatus 13 includes a processor 50, a system memory 51, a storage memory 52, an input interface 53, an output interface 54, and a communication interface 55.

The storage memory 52 stores a management program A3. The management program A3 is read into the system memory 51 and executed by the processor 50. This configuration is a processing circuit example. The management program A3 may be partially or entirely executed by a processor external to the management apparatus 13, and an execution result may be received at the management apparatus 13.

The input interface 53 is a user interface for the monitoring person to input instructions. Examples of the input interface 53 include a mouse, a keyboard, a j oystick, a touch panel, and a microphone. The output interface 54 is a user interface that outputs information to the monitoring person. An example of the output interface 54 is a display. The output interface 54 is capable of displaying, real-time, flight data received from each aerial vehicle 11 or information that is based on the flight data. The output interface 54 may include a speaker.

The communication interface 55 includes a communicator connected to the network N. The communication interface 55 receives flight data from each aerial vehicle 11 via the base station G and the network N. The flight data indicates a flight state of the each aerial vehicle 11. The input interface 53, the output interface 54, and the communication interface 55 are connected to the processor 50.

The management apparatus 13 transmits the flight plan information to the plurality of aerial vehicles 11 via the network N and the base station G. In accordance with the flight plan information, each aerial vehicle 11 makes an automatic flight in the plural-management mode. While the each aerial vehicle 11 is flying in the plural-management mode, the management apparatus 13 holds the operation authorization to operate the each aerial vehicle 11. When the aerial vehicle 11 in the plural-management mode reaches the landing/take-off point, the aerial vehicle 11 may wait by hovering at the landing/take-off point. In this case, the management apparatus 13 may transmit permission to land or take-off to or from the aerial vehicle 11. The flight plan information may include a planned flight time. In this case, when the aerial vehicle 11 reaches the landing/take-off point, the aerial vehicle 11 may land and take-off without permission from the management apparatus 13.

The management apparatus 13 monitors a flight state of each of the plurality of aerial vehicles 11 in the plural-management mode. Based on the flight data of each aerial vehicle 11, the processor 50 determines whether the flight state of the each aerial vehicle 11 satisfies a predetermined flight condition. The processor 50 outputs, to the output interface 54, notification information indicating the aerial vehicle 11 that is in a flight state satisfying the flight condition. This enables the monitoring person to be aware of a particular aerial vehicle 11 whose operation authorization to be granted for the operation terminal 12.

The management apparatus 13 manages operation authorizations of the plurality of aerial vehicles 11. Specifically, the management apparatus 13 is capable of granting the operation terminal 12 an operation authorization to operate one aerial vehicle 11 selected from the plurality of aerial vehicles 11. There is a predetermined authorization grant condition to be satisfied before an operation authorization to operate a particular aerial vehicle 11 is granted. When the predetermined authorization grant condition is satisfied for one particular aerial vehicle 11 among the plurality of aerial vehicles 11 in the plural-management mode, the processor 50 grants the operation terminal 12 an operation authorization to operate the particular aerial vehicle 11. Upon the management apparatus 13 granting the operation terminal 12 the operation authorization to operate the particular aerial vehicle 11, the operation authorization to operate the particular aerial vehicle 11 is shifted from the management apparatus 13 to the operation terminal 12. Once the operation authorization to operate the particular aerial vehicle 11 is shifted to the operation terminal 12, the management apparatus 13 loses the operation authorization to operate the particular aerial vehicle 11, and the particular aerial vehicle 11 does not make a flight based on a command from the management apparatus 13.

For example, the processor 50 receives operation authorization grant signals that the monitoring person has transmitted based on the flight states of the plurality of aerial vehicles 11. Upon receipt of the operation authorization grant signals, the processor 50 generates an authorization grant command to grant the operation terminal 12 the operation authorization to operate the particular aerial vehicle 11. Specifically, upon selection of the particular aerial vehicle 11 by the monitoring person on the input interface 53, the processor 50 grants the operation terminal 12 the operation authorization to operate the selected particular aerial vehicle 11. The management apparatus 13 is also capable of causing the operation authorization granted to the operation terminal 12 to be returned to the management apparatus 13.

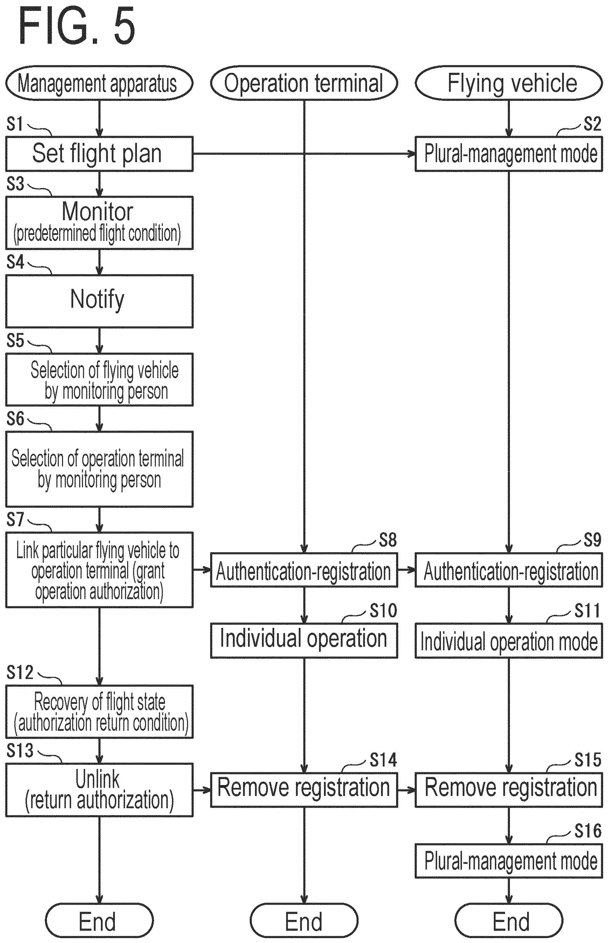

FIG. 5 is a sequence chart of processing performed by the flight management system 1 illustrated in FIG. 1. This processing performed by the flight management system 1 will be described below according to the flow illustrated in FIG. 5 and, as necessary, by referring to the configurations illustrated in FIGs. 1 to 4.

The management apparatus 13 individually sets flight plans for the plurality of aerial vehicles 11 in response to a command from a predetermined plan program, the monitoring person, or an external server (step S1). Specifically, the management apparatus 13 transmits, to each aerial vehicle 11, flight plan information concerning a planned flight route, a planned flight speed, and a landing/take-off point. Upon receipt of the flight plan information, the aerial vehicle 11 makes an automatic flight in the plural-management mode in accordance with the flight plan information (step S2).

Based on the flight data received from each aerial vehicle 11, the management apparatus 13 determines whether the flight state of the each aerial vehicle 11 satisfies the predetermined flight condition (step S3). The flight data includes data obtained from at least one of the sensors 23 to 28 and the camera 29 of the aerial vehicle 11. The flight data includes, for example, position data and speed data of the aerial vehicle 11. The flight state of the aerial vehicle 11 includes a flight position and a flight speed of the aerial vehicle 11. In this embodiment, the above-described flight condition is a predetermined abnormality condition. The flight condition includes a fact that the flight position of the aerial vehicle 11 is deviating from the planned flight route of the aerial vehicle 11. For example, if the difference between the flight position of the aerial vehicle 11 and the planned flight route of the aerial vehicle 11 is in excess of a predetermined distance, the management apparatus 13 determines that the aerial vehicle 11 is deviating from its planned flight route.

The flight condition includes a fact that the flight positions and the flight speeds of two aerial vehicles 11 among the plurality of aerial vehicles 11 satisfy a predetermined proximity condition. For example, when the distance between two aerial vehicles 11 is less than a predetermined threshold, the management apparatus 13 determines that the two aerial vehicles 11 are in close proximity to each other. The threshold may be a variable threshold that increases as the flight speed of the aerial vehicle 11 increases. It is to be noted that the proximity condition may not necessarily include flight speed and that the threshold may be a fixed threshold.

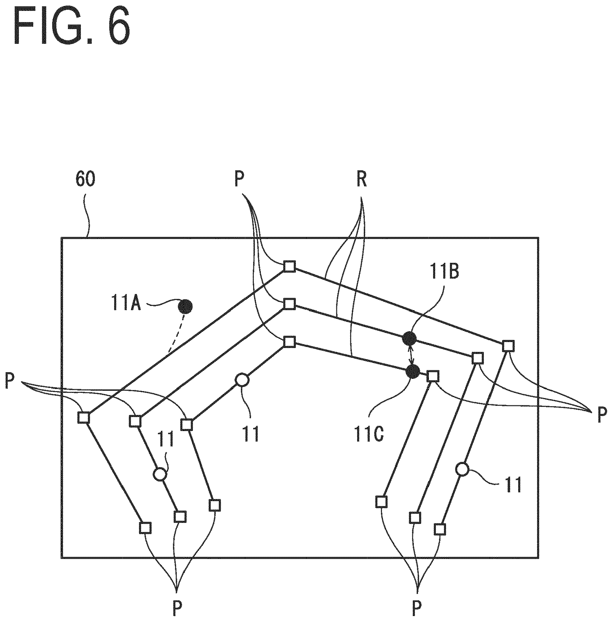

The output interface 54 of the management apparatus 13 includes a monitor screen 60. As illustrated in FIG. 6, the monitor screen 60 displays planned flight routes R, landing/take-off points P, and marks. The landing/take-off points P are located on the planned flight routes R. The marks indicate the positions of the aerial vehicles 11. The marks indicating the positions of the aerial vehicles 11 are displayed in a real-time manner. It is to be noted that the number and alphabet by each mark in FIG. 6 correspond to the number and alphabet of an aerial vehicle for ease of description. In the monitor screen 60, an aerial vehicle 11 flying in the plural-management mode is displayed in a first display form, which corresponds to the plural-management mode.

The management apparatus 13 outputs notification information indicating aerial vehicles 11A to 11C to the monitor screen 60 of the output interface 54 (step S4). The aerial vehicles 11A to 11C are in flight states satisfying the flight condition. For example, the monitor screen 60 displays a mark 11A, a mark 11B, and a mark 11C in a second display form, which is different from the first display form. The mark 11A indicates a aerial vehicle deviating from the planned flight route. The marks 11B and 11C indicate two aerial vehicles that are in close proximity to each other. With this monitor screen 60, the management apparatus 13 notifies the monitoring person that the aerial vehicles 11A to 11C are in flight states satisfying the flight condition. An example of the second display form is highlighting. The second display form may be a use of a shape different from the shape used in the first display form. The first display form may be lighting and the second display form may be intermittent flashing. The second display form may be a use of a color different from the color used in the first display form. The second display form may be a use of a drawing size larger than the size used in the first display form. At the time of the notification, the output interface 54 may output alarm sound.

The monitoring person selects a aerial vehicle 11 from the aerial vehicles 11 including the aerial vehicles 11A to 11C highlighted on the monitor screen 60 (step S5). The selected aerial vehicle 11 is an aerial vehicle 11 that the monitoring person has determined as being necessary to be individually operated. The selected aerial vehicle 11 defined as a particular aerial vehicle. The particular aerial vehicle may be selected from the aerial vehicles 11A to 11C highlighted on the monitor screen 60, or may be selected from other aerial vehicles 11. For example, in a case where the aerial vehicle 11A has been determined as being necessary to be individually operated, the monitoring person selects the aerial vehicle 11A and designates the aerial vehicle 11A as the particular aerial vehicle.

The monitoring person selects an operation terminal 12 with which to individually operate a particular aerial vehicle 11A (step S6). Specifically, based on display information of the aerial vehicles 11A to 11C on the monitor screen 60 and other the aerial vehicles 11, the monitoring person selects the particular aerial vehicle 11A on the input interface 53, causing an authorization grant request signal to be input to the management apparatus 13. That is, in this embodiment, the authorization grant request signal is a request signal obtained based on the flight state of each aerial vehicle 11.

Upon receipt of the authorization grant request signal, the management apparatus 13 links the selected particular aerial vehicle 11A and the selected operation terminal 12 to each other (step S7). Specifically, the management apparatus 13 causes the selected particular aerial vehicle 11A and the selected operation terminal 12 to authenticate each other and register each other as a communication end of direct wireless communication (step S8 and S9). Authentication information may be provided from the management apparatus 13 to the particular aerial vehicle 11A and the operation terminal 12. When the authentication and registration at the particular aerial vehicle 11A and the operation terminal 12 are completed, this means that the operation terminal 12 has been granted the operation authorization to operate the particular aerial vehicle 11A. That is, the command transmitted from the management apparatus 13 to the particular aerial vehicle 11A and the operation terminal 12 at steps S8 and S9 means an authorization grant command.

There may be a case where while the authentication and registration at the particular aerial vehicle 11A and the operation terminal 12 were completed in the past, the registration has been in invalidated state. In this case, the registration may be re-validated to mean that the operation authorization is granted. It is to be noted that the command is also a mode switch command to shift the mode of the particular aerial vehicle 11A from the plural-management mode to the individual operation mode. Specifically, the management apparatus 13 generates a mode switch command at the time of granting the operation terminal 12 the operation authorization to operate the particular aerial vehicle 11A.

Once the operation terminal 12 obtains the operation authorization, a notification is output to the output interface 44 of the operation terminal 12, indicating that the operation authorization to operate the particular aerial vehicle 11A has been obtained. Upon receipt of the notification, the operator operates the operation interface 43 of the operation terminal 12 to remotely control the particular aerial vehicle 11A to return the particular aerial vehicle 11A fly to its planned flight route R (step S10). At a command from the operation terminal 12, the particular aerial vehicle 11A flies in the individual operation mode (step S11).

After the operation terminal 12 has been granted the operation authorization to operate the particular aerial vehicle 11A, the particular aerial vehicle 11A starts receiving commands from the operation terminal 12. This serves as a trigger to shift the mode of the particular aerial vehicle 11A from the plural-management mode to the individual operation mode. In the monitor screen 60 illustrated in FIG. 6, the mark 11A of the particular aerial vehicle shifted to the individual operation mode is changed to a third display form, which indicates the individual operation mode. The third display form is different from the first display form and the second display form. The third display form may be a use of a shape different from the shapes used in the first display form and the second display form. The third display form may be a use of a color different from the colors used in the first display form and the second display form.

Upon determining that the particular aerial vehicle 11A is back to its planned flight route R (step S12), the management apparatus 13 unlinks the particular aerial vehicle 11A and the operation terminal 12 from each other (step S13). That is, the fact that the particular aerial vehicle 11A is determined as being back to its planned flight route R means that an authorization return condition has been satisfied. At the time of unlinking, the operation terminal 12 may notify the operator on the output interface 44 that the operation authorization to operate the particular aerial vehicle 11A has been returned to the management apparatus 13. It is to be noted that the operation authorization to operate the particular aerial vehicle 11A may be returned from the operation terminal 12 to the management apparatus 13 based on an operation of the operation terminal 12 by the operator.

Specifically, the management apparatus 13 causes each of the particular aerial vehicle 11A and the operation terminal 12 to remove the registration information registered as the communication end at steps S8 and S9 (step S14 and S15). The fact that each of the particular aerial vehicle 11A and the operation terminal 12 removes other's registration information means that the operation authorization to operate the particular aerial vehicle 11A has been returned from the operation terminal 12 to the management apparatus 13. It is to be noted that instead of removing the registration information, the management apparatus 13 may invalidate the registration. In this case, the fact that the registration has been invalidated means that the operation authorization has been returned.

Upon unlinking of the particular aerial vehicle 11A and the operation terminal 12 from each other, the particular aerial vehicle 11A returns its mode to the plural-management mode and flies along the planned flight route R (step S16). That is, the unlinking performed by the management apparatus 13 means a command to return the mode of the particular aerial vehicle 11A from the individual operation mode to the plural-management mode.

In the above-described example, it is the aerial vehicle 11A that the monitoring person selects as a particular aerial vehicle. In a case where the monitoring person selects the aerial vehicle 11B in FIG. 6, the management apparatus 13 links the particular aerial vehicle 11B and the operation terminal 12 to each other, similarly to the above-described example (step S7). The operator individually operates the operation interface 43 of the operation terminal 12 to remotely control the particular aerial vehicle 11B to make the particular aerial vehicle 11B away from the proximate aerial vehicle 11C (step S10). Upon determining that the distance between the particular aerial vehicle 11B and the proximate aerial vehicle 11C is equal to or greater than a threshold (step S12), the management apparatus 13 unlinks the particular aerial vehicle 11B and the operation terminal 12 from each other (step S13). There may be a case where a flight of an aerial vehicle highlighted on the monitor screen 60 can be expected to affect an aerial vehicle 11 not highlighted on the monitor screen 60. In this case, the monitoring person may select the un-highlighted aerial vehicle 11 and grant the operation terminal 12 the operation authorization to operate the un-highlighted aerial vehicle 11.

It is to be noted that the flight management system 1 will not be limited to the above-described embodiment. For example, the aerial vehicle 11 may be a manned vehicle, instead of being an unmanned vehicle. The aerial vehicle 11 may also be, for example, a fixed-wing vehicle having a jet engine. The operation terminal 12 may remotely control the aerial vehicle 11 via the network N and the base station G, instead of remotely controlling the aerial vehicle 11 by direct wireless communication. In this case, the operator may operate the operation interface 43 while visually checking the position of the aerial vehicle 11 on the output interface 44 of the operation terminal 12.

A aerial vehicle satisfying the flight condition may not necessarily be manually selected by the monitoring person; the management apparatus 13 may automatically select a aerial vehicle satisfying the flight condition as an aerial vehicle whose operation authorization is granted to the operation terminal 12. That is, the management apparatus 13 may automatically grant the operation terminal 12 the operation authorization to operate an aerial vehicle 11 determined as satisfying the flight condition.

The flight condition will not be limited to an abnormality condition. For example, the flight condition may be such a condition that the vehicle is flying in a predetermined region. Examples of the predetermined region include a region of bad weather conditions and a region of bad airflow conditions. The flight condition may be such a condition that any one of the sensors 23 to 28 and the camera 29 of the aerial vehicle 11 has a failure.

The authorization return condition may be satisfied by the monitoring person manually inputting a command to the management apparatus 13 to return the operation authorization to operate the particular aerial vehicle 11A to the management apparatus 13 from the operation terminal 12. The authorization return condition may also be satisfied by the operator manually inputting a command to the operation terminal 12 to return the operation authorization to operate the particular aerial vehicle 11A to the management apparatus 13 from the operation terminal 12.

Each of the following items is a disclosure of a preferred embodiment.

### [Item 1]

A flight management system for a plurality of aerial vehicles includes a management apparatus and an operation terminal. The management apparatus includes a processing circuit configured to manage operation authorizations to operate the plurality of aerial vehicles. The operation terminal includes an operation interface and a processing circuit. The operation interface is operable by an operator. The processing circuit is connected to the operation interface. Based on an authorization grant request signal obtained based on a flight state of each aerial vehicle of the plurality of aerial vehicles, the processing circuit of the management apparatus is configured to generate an authorization grant command to grant the operation terminal an operation authorization, among the operation authorizations, that is to operate a particular aerial vehicle among the plurality of aerial vehicles. The processing circuit of the operation terminal is configured to remotely control the particular aerial vehicle while being granted the operation authorization to operate the particular aerial vehicle.

This configuration ensures that on the one hand, the management apparatus manages flight of a plurality of aerial vehicles, and that on the other hand, upon generation of an authorization grant request signal for a particular aerial vehicle, the particular aerial vehicle is controlled by an operator using the operation terminal. This configuration ensures that while a plurality of aerial vehicles are remotely operable, the number of operators is smaller than the number of aerial vehicles.

### [Item 2]

In the flight management system for a plurality of aerial vehicles, according to item 1, the management apparatus further includes an input interface for a monitoring person to input an instruction.

The processing circuit of the management apparatus is configured to generate the authorization grant request signal upon selection of the particular aerial vehicle by the monitoring person on the input interface.

This configuration enables the monitoring person to determine whether to switch from the state in which the flight of the particular aerial vehicle is managed by the management apparatus to the state in which the particular aerial vehicle is controlled by the operator using the operation terminal. As a result, the degree of freedom of the switching increases and monitoring reliability of the monitoring of the aerial vehicles improves.

### [Item 3]

In the flight management system for a plurality of aerial vehicles, according to item 1 or 2, the management apparatus further includes a communication interface configured to receive flight data indicating the flight state of the each aerial vehicle.

Based on the flight data, the processing circuit of the management apparatus is configured to determine whether the flight state of the each aerial vehicle satisfies a predetermined flight condition.

The processing circuit of the management apparatus is configured to generate the authorization grant request signal upon determining that the flight state of the particular aerial vehicle that is flying while the management apparatus is holding the operation authorization to operate the particular aerial vehicle satisfies the predetermined flight condition.

This configuration ensures that based on the flight data of the plurality of aerial vehicles, a monitoring is performed as to whether there is an aerial vehicle to be switched to the state of being controlled by the operator using the operation terminal. As a result, aerial vehicles to be controlled by the operator using the operation terminal can be determined without excess or deficiency.

### [Item 4]

In the flight management system for a plurality of aerial vehicles, according to item 3, the management apparatus further includes an output interface configured to output information to the monitoring person.

The processing circuit of the management apparatus is configured to output notification information to the output interface, the notification information indicating the particular aerial vehicle in the flight state satisfying the flight condition.

This configuration enables the monitoring person to know, from the notification information on the output interface, an aerial vehicle to be switched to the state of being controlled by the operator using the operation terminal.

### [Item 5]

In the flight management system for a plurality of aerial vehicles, according to item 3 or 4, the flight data includes position data of the each aerial vehicle.

The flight state includes a flight position of the each aerial vehicle.

The flight condition includes a fact that the flight position of the particular aerial vehicle is deviating from a planned flight route of the particular aerial vehicle.

This configuration contributes to the operator using the operation terminal in returning a particular aerial vehicle deviating from its planned flight route to the planned flight route.

### [Item 6]

In the flight management system for a plurality of aerial vehicles, according to any one of items 3 to 5, the flight data includes position data of the each aerial vehicle.

The flight state includes a flight position of the each aerial vehicle.

The flight condition includes a fact that the flight position of a proximate aerial vehicle, among the plurality of aerial vehicles, that is most proximate to the particular aerial vehicle and the flight position of the particular aerial vehicle satisfy a predetermined proximity condition.

This configuration contributes to the operator using the operation terminal in moving the particular aerial vehicle away from the proximate aerial vehicle when the particular aerial vehicle is too close to the proximate aerial vehicle.

### [Item 7]

In the flight management system for a plurality of aerial vehicles, according to any one of items 1 to 6, the each aerial vehicle is configured to fly in a mode that is either a plural-management mode or an individual operation mode.

In the plural-management mode, the each aerial vehicle is configured to fly based on flight plan information provided from the management apparatus.

In the individual operation mode, the each aerial vehicle is configured to fly based on flight plan information provided from the operation terminal or based on an input provided from the operation terminal regarding a flight speed, a flight altitude, and a flight direction.

In granting the operation terminal the operation authorization to operate the particular aerial vehicle, the management apparatus is configured to generate a mode switch command to shift the mode of the particular aerial vehicle from the plural-management mode to the individual operation mode.

This configuration ensures smooth switching between operations of the particular aerial vehicle.

### [Item 8]

In the flight management system for a plurality of aerial vehicles, according to any one of items 1 to 7, upon a predetermined authorization return condition being satisfied for the particular aerial vehicle flying while the operation terminal is being granted the operation authorization to operate the particular aerial vehicle, the processing circuit of the management apparatus or the processing circuit of the operation terminal is configured to generate a command to return the operation authorization to operate the particular aerial vehicle from the operation terminal to the management apparatus.

With this configuration, upon the authorization return condition being satisfied, the state of the flight of the particular aerial vehicle returns to the state of being managed by the management apparatus. This configuration saves the labor of manual operation using the operation terminal.

As disclosed in this specification, the aerial vehicle 11, the operation terminal 12, and the management apparatus 13 each include elements such as a processor, a system memory, and a storage memory. The functions of these elements can be implemented by a circuit or a processing circuit configured or programmed to perform the disclosed functions. Examples of such circuit and processing circuit include a general-purpose processor, a special-purpose processor, an integrated circuit, an ASIC (Application Specific Integrated Circuit), a FPGA (Field Programmable Gate Array), a conventional circuit, and/or a combination of these processors and circuits. A processor includes transistors and other circuits, and as such, is regarded as a processing circuit or a circuit. In the present disclosure, a circuit, a unit, or means is hardware that performs the recited functions or hardware programmed to perform the recited functions. This hardware may be hardware disclosed in this specification or may be other known hardware programmed or configured to perform the recited functions. When hardware is a processor considered as one kind of circuit, then a circuit, a unit, or means is a combination of hardware and software, and the software is used in the configuration of the hardware and/or processor.

While the present disclosure has been described in connection with embodiments, it will be understood that the above-described embodiments will not be intended in a limiting sense and that omissions, substitutions, additions, and/or alterations may be made to the embodiments. It will also be understood that the components and/or configurations described in the embodiments may be combined to form a new embodiment. For example, one or some of the configurations described in the embodiments may be isolated from the rest of the configurations in any manner deemed suitable. It will further be understood that the components and/or configurations described in the accompanying drawings and detailed description not only include those components and/or configurations essential for problem solving purposes but also include those components and/or configurations inessential for problem solving purposes.

### Reference Signs List

1 Flight management system
11 Aerial vehicle
11 A to 11C Particular aerial vehicle
12 Operation terminal
13 Management apparatus
40 Processor
43 Operation interface
50 Processor
53 Input interface
54 Output interface
55 Communication interface
A2 Operation program
A3 Management program

## Claims

1. A flight management system for a plurality of aerial vehicles, the flight management system comprising:
a management apparatus comprising a processing circuit configured to manage operation authorizations to operate the plurality of aerial vehicles; and
an operation terminal comprising:
an operation interface operable by an operator; and
a processing circuit connected to the operation interface,
wherein based on an authorization grant request signal obtained based on a flight state of each aerial vehicle of the plurality of aerial vehicles, the processing circuit of the management apparatus is configured to generate an authorization grant command to grant the operation terminal an operation authorization, among the operation authorizations, that is to operate a particular aerial vehicle among the plurality of aerial vehicles, and
wherein the processing circuit of the operation terminal is configured to remotely control the particular aerial vehicle while being granted the operation authorization to operate the particular aerial vehicle.

2. The flight management system for a plurality of aerial vehicles, according to claim 1,
wherein the management apparatus further comprises an input interface for a monitoring person to input an instruction, and
wherein the processing circuit of the management apparatus is configured to generate the authorization grant request signal upon selection of the particular aerial vehicle by the monitoring person on the input interface.

3. The flight management system for a plurality of aerial vehicles, according to claim 1 or 2,
wherein the management apparatus further comprises a communication interface configured to receive flight data indicating the flight state of the each aerial vehicle,
wherein based on the flight data, the processing circuit of the management apparatus is configured to determine whether the flight state of the each aerial vehicle satisfies a predetermined flight condition, and
wherein the processing circuit of the management apparatus is configured to generate the authorization grant request signal upon determining that the flight state of the particular aerial vehicle that is flying while the management apparatus is holding the operation authorization to operate the particular aerial vehicle satisfies the predetermined flight condition.

4. The flight management system for a plurality of aerial vehicles, according to claim 3,
wherein the management apparatus further comprises an output interface configured to output information to the monitoring person, and
wherein the processing circuit of the management apparatus is configured to output notification information to the output interface, the notification information indicating the particular aerial vehicle in the flight state satisfying the flight condition.

5. The flight management system for a plurality of aerial vehicles, according to claim 3 or 4,
wherein the flight data comprises position data of the each aerial vehicle,
wherein the flight state comprises a flight position of the each aerial vehicle, and
wherein the flight condition comprises a fact that the flight position of the particular aerial vehicle is deviating from a planned flight route of the particular aerial vehicle.

6. The flight management system for a plurality of aerial vehicles, according to claim 3 or 4,
wherein the flight data comprises position data of the each aerial vehicle,
wherein the flight state comprises a flight position of the each aerial vehicle, and
wherein the flight condition comprises a fact that the flight position of a proximate aerial vehicle, among the plurality of aerial vehicles, that is most proximate to the particular aerial vehicle and the flight position of the particular aerial vehicle satisfy a predetermined proximity condition.

7. The flight management system for a plurality of aerial vehicles according to any one of claims 1 to 6,
wherein the each aerial vehicle is configured to fly in a mode that is either a plural-management mode or an individual operation mode,
wherein in the plural-management mode, the each aerial vehicle is configured to fly based on flight plan information provided from the management apparatus,
wherein in the individual operation mode, the each aerial vehicle is configured to fly based on flight plan information provided from the operation terminal or based on an input provided from the operation terminal regarding a flight speed, a flight altitude, and a flight direction, and
wherein in granting the operation terminal the operation authorization to operate the particular aerial vehicle, the management apparatus is configured to generate a mode switch command to shift the mode of the particular aerial vehicle from the plural-management mode to the individual operation mode.

8. The flight management system for a plurality of aerial vehicles according to any one of claims 1 to 7, wherein upon a predetermined authorization return condition being satisfied for the particular aerial vehicle flying while the operation terminal is being granted the operation authorization to operate the particular aerial vehicle, the processing circuit of the management apparatus or the processing circuit of the operation terminal is configured to generate a command to return the operation authorization to operate the particular aerial vehicle from the operation terminal to the management apparatus.

9. A flight management method for a plurality of aerial vehicles, the method comprising:
determining whether an authorization grant request signal has been received while a management apparatus is holding an operation authorization, the authorization grant request signal being obtained based on a flight state of each aerial vehicle of the plurality of aerial vehicles;
upon receipt of the authorization grant request signal, granting an operation terminal the operation authorization to operate a particular aerial vehicle; and
remotely controlling the particular aerial vehicle while the operation terminal is being granted the operation authorization to operate the particular aerial vehicle.

10. A flight management program causing at least one processor to execute the flight management method according to claim 9.
